# EUROPEAN PATENT APPLICATION

(11) **EP 0 864 787 A2**
(43) Date of publication of application: **16.09.1998**
(21) Application number: 98301871.4
(22) Date of filing: 12.03.1998
(51) Int. Cl.: F16J 15/34

(54) **Shaft seal construction for a compressor for use in a transcritical refrigeration cycle system**

(30) Priority: 12.03.1997 JP 76574/97
(71) Applicant: Zexel Corporation, Shibuya-ku Tokyo (JP)
(72) Inventor: Kanai, Hiroshi, c/o Zexel Corporation, Higashimatsuyama-shi, Saitama-ken (JP)
(74) Representative: Britter, Keith Palmer

(57) **Abstract**

A compressor for use in a transcritical refrigeration cycle system comprises a shaft seal (30, 31) interposed between an inner peripheral wall of a housing (4) and a drive shaft (5). The shaft seal (30, 31) comprises a first mechanical seal (31) having an annular shape in cross-section and fitted rigidly on the drive shaft (5), for rotation in unison therewith, and a second mechanical seal (30) having an annular shape in cross-section and secured to the housing (4). The second mechanical seal (30) is arranged in intimate contact with the first mechanical seal (31) in a slidable manner thereon. The second mechanical seal (30) includes a case (30a) secured to the housing (4), a seal element (30b) held within the case (30a) in an axially movable manner, and an urging member (30c) urging the seal element (30b) against the first mechanical seal (31). Further, the compressor may comprise a hollow cylindrical sleeve (62) which is axially movably mounted on one end of the drive shaft (5) in a manner arranged adjacent the first mechanical seal (31), and an urging device (5c, 70) arranged to urge the first mechanical seal (31) against a stopper portion (105a) of the drive shaft (5) via the sleeve (62).

## Description

### BACKGROUND OF THE INVENTION

### Field of the Invention

This invention relates to a shaft seal construction for a compressor for use in a transcritical refrigeration cycle system.

### Description of the Prior Art

A compressor for use in an air conditioning system installed on a vehicle has a shaft seal interposed between a housing and a drive shaft so as to prevent a high-pressure fluid within the housing from leaking out of the compressor.

A typical shaft seal has a lip portion formed of a flexible elastomer, for sealing the drive shaft. The lip portion is pressed against the drive shaft by a spring force and fluid pressure to thereby seal the drive shaft. This kind of shaft seal is called an oil seal or a lip seal.

However, the typical shaft seal is not suitable for sealing against leakage of a high-pressure fluid.

In the above shaft seal, abrasion of the lip portion caused by sliding increases as pressure acting on the same becomes higher. Therefore, if the shaft seal is used in a compressor for use in a transcritical refrigeration cycle system using e.g. carbon dioxide (CO₂) as a refrigerant, in which the pressure level of the refrigerant gas is approximately ten times higher than that of a chlorofluorocarbon used as a refrigerant within a typical refrigeration cycle, the compressor inevitably suffers from the inconveniences of an increase in required torque of the drive shaft, wear of the shaft seal, etc.

To eliminate such inconvenience, it is effective to use mechanical seals as a shaft seal for sealing against leakage of a high-pressure fluid.

A refrigerant compressor using mechanical seals therein has been proposed e.g. by Japanese Laid-Open Utility Model Publication (Kokai) No. 61-120096.

This kind of refrigerant compressor has a shaft seal fitted on a portion of a drive shaft between a boss of a friction plate of a magnetic clutch, which is fitted on a front end of the drive shaft, and a radial bearing supporting an intermediate portion of the drive shaft, so as to prevent lubricating oil for lubricating the radial bearing from leaking out of the compressor.

The shaft seal is comprised of a rotatable mechanical seal and a stationary mechanical seal. The rotatable mechanical seal is fixedly fitted on the drive shaft, for rotation in unison with the drive shaft, while the stationary mechanical seal is fixed to a housing of the compressor.

The rotatable mechanical seal includes a seal element, a case holding the seal element, and a coil spring received in the case, for urging the seal element toward the stationary mechanical seal. The seal element of the rotatable mechanical seal is arranged in intimate contact with the stationary mechanical seal in a rotatable manner.

However, in this construction in which the coil spring is used as a component part of the rotatable mechanical seal as described above, when the drive shaft swings due to an increase in the rotational speed of the compressor (i.e. when the rotational speed exceeds approximately 6000 r.p.m), the coil spring cannot properly respond to or follow the swings of the drive shaft. As a result, the seal element of the rotatable mechanical seal becomes separate from the stationary mechanical seal to produce a gap between the rotatable mechanical seal and the stationary mechanical seal, through which refrigerant gas leaks out of the compressor.

### SUMMARY OF THE INVENTION

It is a first object of the invention to provide a shaft seal construction for a compressor for use in a transcritical refrigeration cycle system, which is capable of holding a rotatable mechanical seal and a stationary mechanical seal in intimate contact with each other even when the rotational speed of the compressor is high.

It is a second object of the invention to provide a compressor for use in a transcritical refrigeration cycle system, which is capable of holding a rotatable mechanical seal and a stationary mechanical seal in intimate contact with each other even when the rotational speed of the compressor is high.

To attain the first object, according to a first aspect of the invention, there is provided a shaft seal construction for a compressor for use in a transcritical refrigeration cycle system, the compressor having a housing, a drive shaft, a bearing arranged within the housing, for rotatably supporting the drive shaft, and a shaft seal interposed between the housing and the drive shaft, wherein the shaft seal includes a first mechanical seal having an annular shape and rigidly fitted on the drive shaft, for rotation in unison with the drive shaft, and a second mechanical seal having an annular shape and secured to the housing, the second mechanical seal being arranged in intimate contact with the first mechanical seal in a manner slidable on the first mechanical seal.

The shaft seal construction according to the first aspect of the invention is characterized in that the second mechanical seal comprises:
a case secured to the housing;
a seal element held within the case in an axially movable manner; and
an urging member urging the seal element against the first mechanical seal.

According to this shaft seal construction, the urging member is used not as a component part of the first mechanical seal, but as a component part of the second mechanical seal, so that even if the rotational speed of the compressor is increased to cause the drive shaft to swing, the rotatable mechanical seal does not move away from the stationary mechanical seal, and hence the intimate contact between the two mechanical seals can be maintained.

Preferably, the urging member is a coil spring.

More preferably, the seal element has a first mechanical seal-side end face formed with an annular raised section.

According to this preferred embodiment, even if the rotational speed of the compressor is increased to cause the drive shaft to swing, the rotatable mechanical seal does not move away from the stationary mechanical seal, and hence the intimate contact between the two mechanical seals can be reliably maintained.

To attain the first object, according to a second aspect of the invention, there is provided a shaft seal construction for a compressor for use in a transcritical refrigeration cycle system, the compressor having a housing, a drive shaft having a stopper portion, a bearing arranged within the housing, for rotatably supporting the driving shaft, and a shaft seal interposed between the housing and the drive shaft, wherein the shaft seal includes a first mechanical seal having an annular shape and rigidly fitted on the drive shaft, for rotation in unison with the drive shaft, and a second mechanical seal having an annular shape and secured to the housing, the second mechanical seal being arranged in intimate contact with the first mechanical seal in a manner slidable on the first mechanical seal.

The shaft seal construction according to the second aspect of the invention is characterized by comprising:
a hollow cylindrical sleeve axially movably mounted on one end of the drive shaft in a manner arranged adjacent to the first mechanical seal; and
urging means for urging the first mechanical seal against the stopper portion

According to this shaft seal construction, the urging means urges the first mechanical seal against the stopper portion of the drive shaft via the sleeve to thereby hold the first mechanical seal in a state rigidly fitted on the drive shaft, so that even if the rotational speed of the compressor is increased to cause the drive shaft to swing, the rotatable mechanical seal does not move away from the stationary mechanical seal, and hence the intimate contact between the two mechanical seals can be maintained.

Preferably, the urging means is a fastening member screwed onto an external thread formed on the drive shaft.

For instance, the fastening member is a lock nut.

Alternatively, the urging means is a hollow cylindrical boss of a friction plate of a magnetic clutch, which is fitted on the one end of the drive shaft.

According to this preferred embodiment, since the boss of the friction plate abutting on one end of the sleeve urges the sleeve to press the first mechanical seal against the stopper portion of the drive shaft, the drive shaft is not required to be formed with the thread onto which the fastening member is screwed. As a result, it is not required, either, that the drive shaft have a large diameter so as to prevent a decrease in its strength due to provision of the thread on the drive shaft. Further, since the fastening member can be dispensed with, neither an operation for fastening the fastening member nor space required for the operation are required.

Further preferably, a shim is removably mounted on the drive shaft between an end of the boss of the friction plate and one end of the sleeve, for adjustment of a gap between the friction plate and a rotor opposed to the friction plate.

According to this preferred embodiment, since a seemingly suitable shim, which is selected out of a plurality of shims different in thickness, is interposed between the end of the boss of the friction plate and the one end of the sleeve, the first mechanical seal is urged against the stopper portion of the drive shaft by the boss of the friction plate via the shim and the sleeve, and at the same time, the gap between the friction plate and the rotor opposed thereto can be adjusted.

Further preferably, the friction plate is fixed to the one end of the drive shaft by a bolt.

According to this preferred embodiment, it is possible to adjust the amount of screwing of the bolt to thereby adjust axial tension working along the drive shaft for urging the first mechanical seal against the stopper portion of the drive shaft.

To attain the second object, according to a third object of the invention, there is provided a compressor for use in a transcritical refrigeration cycle system, the compressor having a housing, a drive shaft, a bearing arranged within the housing, for rotatably supporting the drive shaft, and a shaft seal interposed between the housing and the drive shaft, wherein the shaft seal includes a first mechanical seal having an annular shape and rigidly fitted on the drive shaft, for rotation in unison with the drive shaft, and a second mechanical seal having an annular shape and secured to the housing, the second mechanical seal being arranged in intimate contact with the first mechanical seal in a manner slidable on the first mechanical seal.

The compressor according to the third aspect of the invention is characterized in that the second mechanical seal comprises:
a case secured to the housing;
a seal element held within the case in an axially movable manner; and
an urging member urging the seal element against the first mechanical seal.

This compressor has the advantageous effects as described above as to the first embodiment of the invention.

To attain the second object, according to a fourth object of the invention, there is provided a compressor for use in a transcritical refrigeration cycle system, the compressor having a housing, a drive shaft having a stopper portion, a bearing arranged within the housing, for rotatably supporting the drive shaft, and a shaft seal interposed between the housing and the drive shaft, wherein the shaft seal includes a first mechanical seal having an annular shape and rigidly fitted on the drive shaft, for rotation in unison with the drive shaft, and a second mechanical seal having an annular shape and secured to the housing, the second mechanical seal being arranged in intimate contact with the first mechanical seal in a manner slidable on the first mechanical seal.

The compressor according to the fourth aspect of the invention is characterized by comprising:
a hollow cylindrical sleeve axially movably mounted on one end of the drive shaft in a manner arranged adjacent to the first mechanical seal; and
urging means for urging the first mechanical seal against the stopper portion of the drive shaft via the sleeve.

This compressor has the advantageous effects as described above as to the second embodiment of the invention.

To attain the second object, according to a fifth aspect of the invention, there is provided a compressor which is characterized in that the second mechanical seal comprises:
a case secured to the housing;
a seal element held within the case in an axially movable manner; and
an urging member urging the seal element against the first mechanical seal; and
that the compressor comprises:
a hollow cylindrical sleeve axially movably mounted on one end of the drive shaft in a manner arranged adjacent to the first mechanical seal; and
urging means for urging the first mechanical seal against a stopperportion of the drive shaft via the sleeve.

This compressor has the advantageous effects as described above as to the first and second embodiments of the invention.

The above and other objects, features and advantages of the present invention will become more apparent from the following detailed description taken in conjunction with accompanying drawings.

### BRIEF DESCRIPTION OF THE DRAWINGS

FIG. 1 is an enlarged sectional view showing a shaft seal construction for a compressor for use in a transcritical refrigeration cycle system, according to a first embodiment of the invention;
FIG. 2 is a longitudinal cross-sectional view showing the whole arrangement of the compressor incorporating the shaft seal construction appearing in FIG. 1;
FIG. 3 is an enlarged sectional view showing a shaft seal construction for a compressor for use in a transcritical refrigeration cycle system, according to a second embodiment of the invention; and
FIG. 4 is a longitudinal cross-sectional view showing the whole arrangement of the compressor incorporating the shaft seal construction appearing in FIG. 3.

### DETAILED DESCRIPTION OF THE PREFERRED EMBODIMENTS

The invention will now be described in detail with reference to drawings showing preferred embodiments thereof.

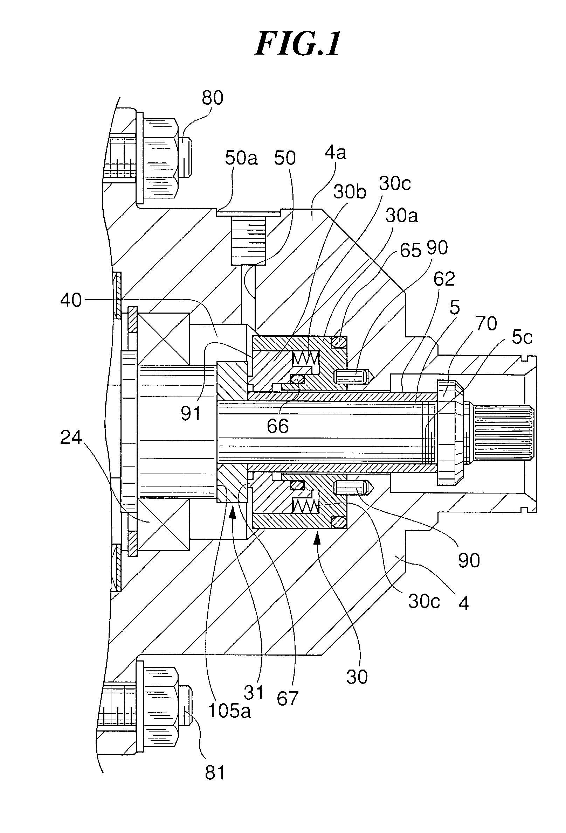

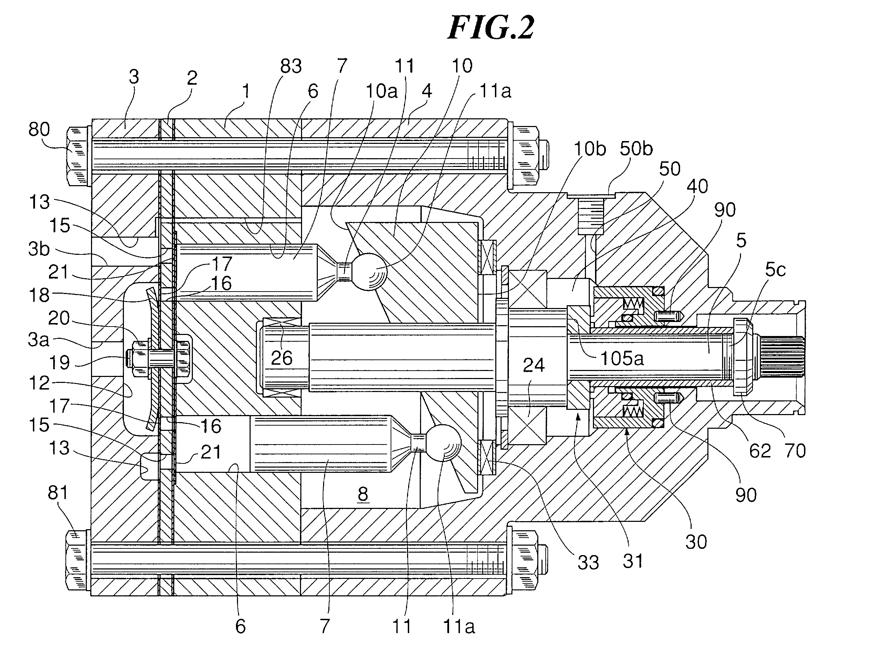

FIG. 1 shows a shaft seal construction for a compressor for use in a transcritical refrigeration cycle system, according to a first embodiment of the invention, on an enlarged scale, and FIG. 2 shows the whole arrangement of the compressor having the shaft seal construction appearing in FIG. 1. In these figures, the internal construction of the compressor is schematically shown, and hence component parts such as a swash plate are not illustrated in detail.

The compressor for use in the transcritical refrigeration cycle system has a cylinder block 1 having one end thereof secured to a rear head 3 via a valve plate 2 and the other end thereof secured to a front head (housing) 4. The cylinder block 1, the rear head 3, and the front head 4 are tightened in a longitudinal direction by through bolts 80, 81. The cylinder block 1 has a plurality of cylinder bores 6 axially extending therethrough at predetermined circumferential intervals about a drive shaft 5. Each cylinder bore 6 has a piston 7 slidably received therein.

The front head 4 defines a crankcase 8 in which a swash plate 10 is received. The swash plate is fixedly fitted on the drive shaft 5. The swash plate 10 has an inclined surface 10a which is inclined at a predetermined angle with respect to an imaginary plane orthogonal to the drive shaft 5. The length of stroke of each piston 7 is determined according to the predetermined inclination angle of the inclined surface 10a of the swash plate 10. Further, the swash plate 10 has a vertical surface 10b orthogonal to the drive shaft 10. The vertical surface 10b of the swash plate 10 is rotatably supported on an inner wall surface of the front head 4 by a thrust bearing 33. Each connecting rod 11 has one end thereof secured to a corresponding one of the pistons 7 and the other end 11a, spherical in shape, connected to the inclined surface 10a of the swash plate 10 such that it slides on the inclined surface 10a of the swash plate 10.

The drive shaft 5 has a rear end rotatably supported by a radial bearing 26 within the cylinder block 1, and an intermediate portion rotatably supported by a radial bearing (bearing) 24 within the front head 4. A shaft seal is interposed between an inner peripheral wall of the front head 4 and a front end of the drive shaft 5. The shaft seal is comprised of a rotatable mechanical seal (first mechanical seal) 31 having an annular shape in cross section and a stationary mechanical seal (second mechanical seal) 30 also having an annular shape in cross section. The stationary mechanical seal 30 is secured to the front head 4, while the rotatable mechanical seal 31 is rigidly fitted on the drive shaft 5. A rear end face of the stationary mechanical seal 30 and a front end face of the rotatable mechanical seal 31 are axially held in intimate contact with each other. A space 40 in which are received the mechanical seals 30, 31 and the radial bearing 24 communicates with the crankcase 8.

The drive shaft 5 has a front end thereof formed with an external thread 5c onto which a lock nut (fastening member) 70 is screwed. On the drive shaft 5, there is axially movably mounted a hollow cylindrical sleeve 62 between the lock nut 70 and the rotatable mechanical seal 31.

When the lock nut 70 is screwed onto the external thread 5c, axial tension working along the drive shaft 5 toward the rear side of the compressor acts on the rotatable mechanical seal 31 via the sleeve 62 to press the rotatable mechanical seal 31 against an abutment surface (stopper portion) 5a of the drive shaft 5. The rotatable mechanical seal 31 thus rigidly fitted on the drive shaft 5 rotates in unison with the drive shaft 5 as the drive shaft 5 rotates.

When the sleeve 62 and the lock nut 70 are mounted on the drive shaft 5, first, the sleeve 62 is fitted on the drive shaft 5, and then the lock nut 70 is screwed onto the external thread 5c formed on the drive shaft 5. Thereafter, a friction plate of a magnetic clutch, not shown, is splined onto the front end of the drive shaft 5, and finally, the friction plate is fixed by a bolt, not shown.

The stationary mechanical seal 30 includes a case 30a secured to inner walls of the front head 4 via an O ring 65, a seal element 30b axially movably held or supported within the case 30a via an O ring 66, and a coil spring 30c for urging the seal element 30b toward the rotatable mechanical seal 31. The case 30a is fixed to the front head 4 by dowels 90 for properly positioning the stationary mechanical seal 30. The seal element 30b has a rear end face 91 formed with an annular raised section 67. The raised section 67 is held in intimate contact with the rotatable mechanical seal 31 by the urging force of the coil spring 30c.

The front head 4 has an upper wall portion 4a formed therethrough with a lubricating oil return passage 50 which communicates with the space 40. Lubricating oil returned from an oil separator, not shown, is fed into the space 40 via the lubricating oil return passage 50.

The rear head 3 define a discharge chamber 12 and a suction chamber 13 surrounding the discharge chamber 12.

The valve plate 2 is formed with refrigerant outlet ports 16 for each communicating between a compression chamber within a corresponding one of the cylinder bores 6 and the discharge chamber 12, and refrigerant inlet ports 15 for each communicating between a compression chamber within a corresponding one of the cylinder bores 6 and the suction chamber 13. The refrigerant outlet ports 16 and the refrigerant inlet ports 15 are arranged at predetermined circumferential intervals, about the drive shaft 5. Each refrigerant outlet port 16 is opened and closed by a discharge valve 17. The discharge valve 17 is fixed to a rear head-side end face of the valve plate 2 by a bolt 19 and a nut 20 together with a valve stopper 18.

On the other hand, each refrigerant inlet port 15 is opened and closed by a suction valve 21 arranged between the valve plate 2 and the cylinder block 1. A communication passage 60 is formed through the cylinder block 1 to connect between the suction chamber 13 and the crankcase 8.

Next, the operation of the compressor constructed as above will be described.

Torque of an engine, not shown, installed on an automotive vehicle, not shown, is transmitted to the drive shaft 5 to rotate the same. As the drive shaft 5 rotates, the swash plate 10 rotates in unison with the drive shaft 5.

The rotation of the swash plate 10 causes the spherical end lla of each of the connecting rods 11 to slide on the inclined surface 10a of the swash plate 10, whereby the torque transmitted from the swash plate 10 is converted into the reciprocating motion of the piston 7. As the piston 7 reciprocates within the cylinder bore 6, the volume of the compression chamber within the cylinder bore 6 changes. As a result, suction, compression and delivery of refrigerant gas are sequentially carried out in the compression chamber. During the suction stroke of the piston 7, the suction valve 21 opens to draw low-pressure refrigerant gas from the suction chamber 13 into the compression chamber within the cylinder bore 6, while during the discharge stroke of the piston 7, the discharge valve 17 opens to deliver high-pressure refrigerant gas from the compression chamber to the discharge chamber 12.

The refrigerant gas delivered to the discharge chamber 12 is discharged from the compressor via a discharge port 3a of the same together with lubricating oil contained therein (i.e. as a high-pressure fluid essentially consisting of refrigerant and lubricating oil), and then flows into the oil separator where the refrigerant gas and the lubricating oil are separated from each other. After having undergone the oil separation, the refrigerant gas is delivered to the cooler, not shown, while the lubricating oil separated from the refrigerant gas within the oil separator is returned to the compressor. The lubricating oil returned to the compressor is fed into the space 40 via the lubricating oil return passage 50 to lubricate the radial bearing 24 and the mechanical seals 30, 31.

According to the shaft seal construction for the compressor for use in the transcritical refrigeration cycle system, according to the first embodiment of the invention, the coil spring 30c is used as a component part of the stationary mechanical seal 30, not as a component part of the rotatable mechanical seal 31. Further, the rotatable mechanical seal 31 is held in a state fixedly fitted on the drive shaft 5 by the use of axial tension which is applied via the sleeve 62 by the lock nut 70 fastened to the drive shaft 5, to press the rotatable mechanical seal 31 against the abutment surface 5a of the drive shaft 5. Therefore, even if the rotational speed of the compressor is increased to cause the drive shaft 5 to swing, the rotatable mechanical seal 31 does not move away from the stationary mechanical seal 30, and hence the intimate contact between the two mechanical seals 30, 31 can be maintained, preventing leakage of refrigerant gas due to faulty sealing.

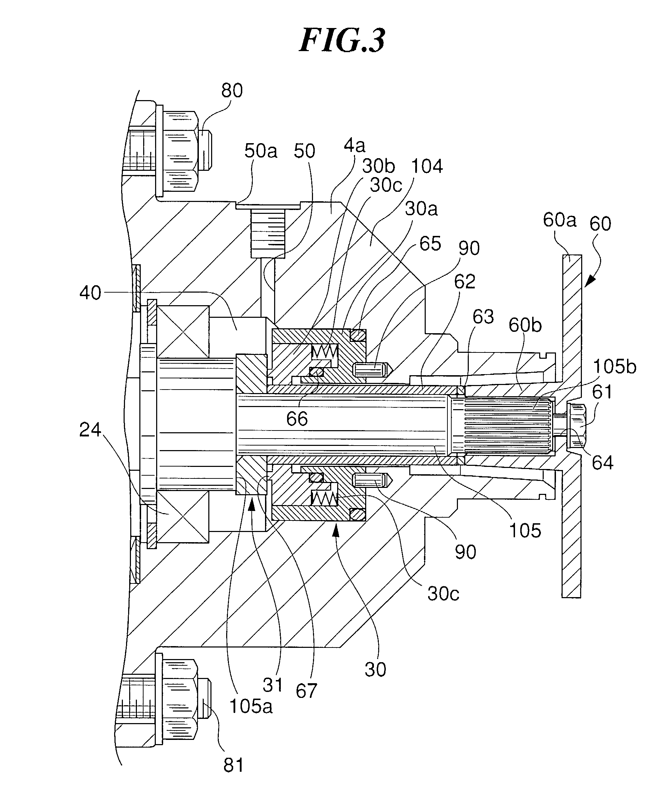

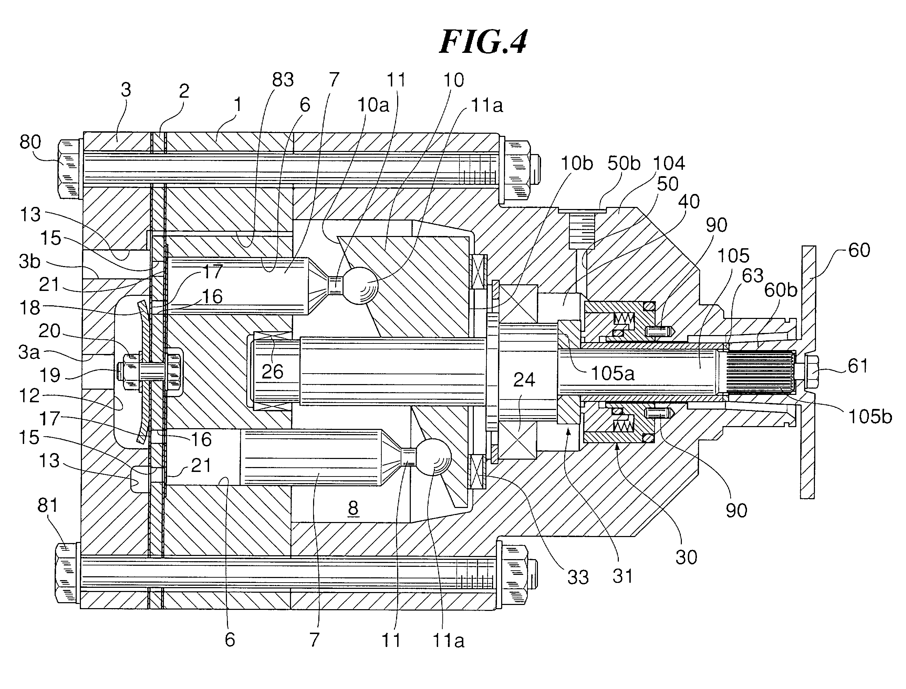

FIG. 3 shows a shaft seal construction for a compressor for use in the transcritical refrigeration cycle system, according to a second embodiment of the invention, on an enlarged scale, and FIG. 4 shows the whole arrangement of the compressor having the shaft seal construction appearing in FIG. 3. In the figures, similarly to FIGS. 1 and 2, the internal construction of the compressor is schematically shown, and hence component parts such as a swash plate are not illustrated in detail. Component parts and elements having the same construction and functions as those described of the first embodiment are designated by identical reference numerals, and detailed description thereof is omitted.

A friction plate 60 of a magnetic clutch is fixedly fitted on a front end of a drive shaft 105 by a bolt 61. The friction plate 60 is comprised of a disk 60a and a hollow cylindrical boss 60b formed integrally with the disk 60a in a manner protruding from a central portion of the disk 60a. The front end of the drive shaft 105 has splines 105b formed thereon, and the boss 60b is fitted (or splined) on the front end of the drive shaft 105. A hollow cylindrical sleeve 62 is fitted on a portion of the drive shaft 105 between the boss 60b of the friction plate 60 and a rotatable mechanical seal 31 in an axially movable manner. The boss 60b of the friction plate 60 has an end thereof abutting on one end of the sleeve 62 via a shim 63. The other end of the sleeve 62 abuts on the rotatable mechanical seal 31. The shim 63, which is removable, is selected out of a plurality of shims different in thickness and thereafter mounted on the drive shaft 105 between the end of the boss 60b of the friction plate 60 and the one end of the sleeve 62.

Referring to the mounting procedure, first, the sleeve 62 and the shim 63 are sequentially fitted on the drive shaft 105. Then, the boss 60b of the friction plate 60 is fitted on the front end of the drive shaft 105, and finally, the bolt 61 is screwed into a threaded hole, not shown, of the drive shaft 105 via a through hole 64 which is formed in the center of the disk 60a of the friction plate 60.

When the bolt 61 is screwed into the threaded hole of the drive shaft 105, axial tension working along the drive shaft 105 toward the rear side of the compressor acts on the rotatable mechanical seal 31 via the sleeve 62 to press the rotatable mechanical seal 31 against an abutment surface (stopper portion) 105a of the drive shaft 105. The rotatable mechanical seal 31, thus rigidly fitted on the drive shaft 5, can stay rigidly fixed on the drive shaft 105 even during axial forward or backward movement made by the friction plate 60 when the magnetic clutch is engaged or disengaged.

The shaft seal construction for the compressor for use in the refrigeration cycle, according to the second embodiment, provides not only the same effects as obtained by the first embodiment but also the following advantageous effects.

According to the present embodiment, since the boss 60a of the friction plate 60 has the end thereof abutting on the one end of the sleeve 62 via the shim 63 such that the axial tension produced by fastening the bolt 61 can act on the rotatable mechanical seal 31 via the sleeve 62, it is possible to fix the rotatable mechanical seal 31 on the drive shaft 105 without using the lock nut 70 (appearing in FIG. 1). Therefore, the drive shaft 105 is not required to be formed with the external thread 5c onto which is screwed the lock nut 70. As a result, it is not required, either, that the drive shaft 105 have a large diameter so as to prevent a decrease in its strength due to provision of the external thread 5c on the drive shaft, which contributes to reduction of the size and weight of the compressor.

Further, since the lock nut 70 can be dispensed with, it is possible to decrease the number of component parts associated with the shaft seal to thereby simplify the shaft seal construction. At the same time, since neither an operation for fastening the lock nut 70 by using a tool nor space required for the operation are necessitated, it is possible to reduce manufacturing costs of the compressor and prevent an increase in size and weight of the same as well.

Still further, since the shim 63 is interposed between the end of the boss 60b of the friction plate 60 and the one end of the sleeve 62, it is possible to use the shim 63 for adjusting a gap between the friction plate 60 of the magnetic clutch and a rotor (pulley), not shown, opposed to the friction plate 60.

Although in the above embodiment, description is made of a case in which the invention is applied to a fixed capacity swash plate compressor, this is not limitative, but the invention may be applied to other kinds of compressors for use in the transcritical refrigeration cycle system, such as a variable capacity swash plate compressor.

It is further understood by those skilled in the art that the foregoing is the preferred embodiment and variations of the invention, and that various changes and modifications may be made without departing from the spirit and scope thereof.

## Claims

1. A shaft seal construction for a compressor for use in a transcritical refrigeration cycle system, the compressor including a housing (4), a drive shaft (5), and a bearing (24) arranged within the housing (4) and rotatably supporting the drive shaft (5), and the shaft seal construction comprising a shaft seal (30, 31) which is interposed or interposable between the compressor housing (4) and drive shaft (5) and which comprises a first mechanical seal (31) having an annular shape and fitted or fittable rigidly on the compressor drive shaft (5), for rotation in unison therewith, and a second mechanical seal (30) which has an annular shape, which is secured or securable to the compressor housing (4) and which is arranged in intimate contact with and in a slidable manner on the first mechanical seal (31),
characterised in that the second mechanical seal (30) comprises:
a case (30a) secured or securable to the compressor housing (4);
a seal element (30b) held within the case (30a) in an axially movable manner; and
an urging member (30c) urging the seal element (30b) against the first mechanical seal (31).

2. A shaft seal construction according to claim 1, wherein the urging member (30c) is a coil spring.

3. A shaft seal construction according to claim 1 or 2, wherein the seal element (30b) has a first mechanical seal-side end face (91) formed with an annular raised section (67).

4. A shaft seal construction for a compressor for use in a transcritical refrigeration cycle system, the compressor including a housing (4), a drive shaft (5) having a stopper portion (105a), and a bearing (24) arranged within the housing (4) and rotatably supporting the drive shaft (5), and the shaft seal construction comprising a shaft seal (30, 31) which is interposed or interposable between the compressor housing (4) and drive shaft (5) and which comprises a first mechanical seal (31) having an annular shape and fitted or fittable rigidly on the compressor drive shaft (5), for rotation in unison therewith, and a second mechanical seal (30) which has an annular shape, which is secured or securable to the compressor housing (4), and which is arranged in intimate contact with and in a slidable manner on the first mechanical seal (31),
characterised by:
a hollow cylindrical sleeve (62) which is axially movably mounted or mountable on one end of the drive shaft (5) in a manner arranged adjacent the first mechanical seal (31); and
urging means (5c, 70; 60, 60b) urging or arranged to urge the first mechanical seal (31) against the stopper portion (105a) of the compressor drive shaft (5) via the sleeve (62).

5. A shaft seal construction according to claim 4, wherein said urging means comprises a fastening member (70) screwed or screwable on to an external thread (5c) formed on the compressor drive shaft (5).

6. A shaft seal construction according to claim 5, wherein the fastening member (70) is a lock nut.

7. A shaft seal construction according to claim 4, wherein said urging means comprises a hollow cylindrical boss (60b) of a friction plate (60) of a magnetic clutch, which plate (60) is fitted or fittable on the one end of the compressor drive shaft (105).

8. A shaft seal construction according to claim 7, wherein a shim (63) is mounted or mountable removably on the drive shaft (105) between an end of the boss (60b) of the friction plate (60) and one end of the sleeve (62), for adjustment of a gap between the friction plate (60) and a rotor opposed to the friction plate (60).

9. A shaft seal construction according to claim 7 or 8, wherein the friction plate (60) is fixed or fixable to the one end of the compressor drive shaft (105) by a bolt (61).

10. A compressor for use in a transcritical refrigeration cycle system, comprising a housing (4), a drive shaft (5), a bearing (24) arranged within the housing (4) and rotatably supporting the drive shaft (5), and a shaft seal construction according to any of claims 1 to 9.

11. A compressor for use in a transcritical refrigeration cycle system, comprising a housing (4), a drive shaft (5), a bearing (24) arranged within the housing (4) and rotatably supporting the drive shaft (5), and a shaft seal (30, 31) interposed between the housing (4) and the drive shaft (5), wherein the shaft seal (30, 31) comprises a first mechanical seal (31) which has an annular shape and which is fitted rigidly on the drive shaft (5), for rotation in unison therewith, and a second mechanical seal (30) which has an annular shape, which is secured to the housing (4), and which is arranged in intimate contact with and in a slidable manner on the first mechanical seal (31),
characterised in that the second mechanical seal (30) comprises:
a case (30a) secured to the housing (4);
a seal element (30b) held within the case (30a) in an axially movable manner; and
an urging member (30c) urging the seal element (30b) against the first mechanical seal (31).

12. A compressor according to claim 11, wherein the urging member (30c) is a coil spring.

13. A compressor according to claim 11 or 12, wherein the seal element (30b) has a first mechanical seal-side end face (91) formed with an annular raised section (67).

14. A compressor for use in a transcritical refrigeration cycle system, comprising a housing (4), a drive shaft (5, 105) having a stopper portion (105a), a bearing (24) arranged within the housing (4) and rotatably supporting the drive shaft (5, 105) and a shaft seal (30, 31) interposed between the housing (4) and the drive shaft (5, 105), wherein the shaft seal (30, 31) comprises a first mechanical seal (31) which has an annular shape and is fitted rigidly on the drive shaft (5, 105), for rotation in unison therewith, and a second mechanical seal (30) which has an annular shape, which is secured to the housing (4), and which is arranged in intimate contact with and in a slidable manner on the first mechanical seal (31),
characterised by:
a hollow cylindrical sleeve (62) which is axially movably mounted on one end of the drive shaft (5, 105) in a manner arranged adjacent the first mechanical seal (31); and
urging means (5c, 70; 60, 60b) arranged to urge the first mechanical seal (31) against the stopper portion (105a) of the drive shaft (5, 105) via the sleeve (62).

15. A compressor according to claim 14, wherein said urging means comprises a fastening member (70) screwed on to an external thread (5c) formed on the drive shaft (5, 105).

16. A compressor according to claim 15, wherein the fastening member (70) is a lock nut.

17. A compressor according to claim 14, wherein said urging means comprises a hollow cylindrical boss (60b) of a friction plate (60) of a magnetic clutch, which plate (60) is fitted on the one end of the drive shaft (105).

18. A compressor according to claim 17, wherein a shim (63) is mounted removably on the drive shaft (105) between an end of the boss (60b) of the friction plate (60) and one end of the sleeve (62), for adjustment of a gap between the friction plate (60) and a rotor opposed to the friction plate (60).

19. A compressor according to claim 17 or 18, wherein the friction plate (60) is fixed to the one end of the drive shaft (105) by a bolt (61).

20. A compressor for use in a transcritical refrigeration cycle system, comprising a housing (4), a drive shaft (5, 105) having a stopper portion (105a), a bearing (24) arranged within the housing (4) and rotatably supporting the driving shaft (5, 105), and a shaft seal (30, 31) interposed between the housing (4) and the drive shaft (5, 105), wherein the shaft seal (30, 31) comprises a first mechanical seal (31) which has an annular shape and is fitted rigidly on the drive shaft (5, 105), for rotation in unison therewith, and a second mechanical seal (30) which has an annular shape, which is secured to the housing (4), and which is arranged in intimate contact with and in a slidable manner on the first mechanical seal (31),
characterised in that the second mechanical seal comprises:
a case (30a) secured to the housing (4);
a seal element (30b) held within the case (30a) in an axially movable manner; and
an urging member (30c) urging the seal element (30) against the first mechanical seal (31); and
in that the compressor further comprises:
a hollow cylindrical sleeve (62) which is axially movably mounted on one end of the drive shaft (5) in a manner arranged adjacent the first mechanical seal (31); and
urging means (5c, 70; 60, 60b) arranged to urge the first mechanical seal (31) against the stopper portion (105a) of the drive shaft (5) via the sleeve (62).

21. A compressor according to claim 20, wherein the seal element (30b) has a first mechanical seal-side end face (91) formed with an annular raised section (67).

22. A compressor according to claim 20 and 21, wherein said urging means comprises a fastening member (70) screwed on to a thread (5c) formed on the drive shaft (5).

23. A compressor according to claim 20 or 21, wherein said urging means comprises a hollow cylindrical boss (60b) of a friction plate (60) of a magnetic clutch, which plate (60) is fitted on the one end of the drive shaft (105).

24. A compressor according to claim 23, wherein a shim (63) is mounted removably on the drive shaft (105) between an end of the boss (60b) of the friction plate (60) and one end of the sleeve (62), for adjustment of a gap between the friction plate (60) and a rotor opposed to the friction plate (60).

25. A compressor according to claim 23 or 24, wherein the friction plate (60) is fixed to the one end of the drive shaft (105) by a bolt (61).
